(19) Europäisches Patentamt
European Patent Office
Office européen des brevets

(11) **EP 2 138 463 B1**

(12) **EUROPÄISCHE PATENTSCHRIFT**

(45) Veröffentlichungstag und Bekanntmachung des Hinweises auf die Patenterteilung:
**14.12.2011  Patentblatt 2011/50**

(51) Int Cl.:
*B05B 15/12* *(2006.01)*    *C02F 1/24* *(2006.01)*
*C02F 1/00* *(2006.01)*

(21) Anmeldenummer: **09163476.6**

(22) Anmeldetag: **23.06.2009**

(54) **Verfahren zum Betrieb eines Systembeckens einer Lackieranlage**

Method for operating a system basin of a paint finishing system

Procédé destiné au fonctionnement d'une cuve technique d'une installation de laquage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.06.2008  DE 102008029852**

(43) Veröffentlichungstag der Anmeldung:
**30.12.2009  Patentblatt 2009/53**

(73) Patentinhaber: **Henkel AG & Co. KGaA**
**40589 Düsseldorf (DE)**

(72) Erfinder:
• **Rüße, Steffen**
**40789, Monheim (DE)**
• **Senner, Marcus**
**41564, Kaarst (DE)**

(56) Entgegenhaltungen:
**DE-A1- 2 322 792     DE-A1- 4 215 397**
**DE-A1- 10 345 332     DE-U1- 8 629 601**
**US-A- 4 432 870**

**Beschreibung**

Die vorliegende Erfindung betrifft ein Verfahren zum Betrieb eines Systembeckens in einer Lackieranlage. In einer solchen Lackieranlage werden die überschüssigen Lackpartikel, die aus der Lackierkabine über einen Abscheider als Luft-Wasser Gemisch enthaltend die Lackpartikel in das Systembecken überführt werden, im selbigen mittels eines Flotationsprozesses vom Flüssigmedium bzw. der wässrigen Phase getrennt. Im erfindungsgemäßen Verfahren wird eine effektive Trennung der Feststoffpartikel vom Flüssigmedium im Systembekken mittels kontrollierter, der vorherrschenden Fließrichtung entgegengesetzter oder gleichgerichteter Strömungen erreicht, so dass ein erfindungsgemäßer Bereich für das Verhältnis der Fließgeschwindigkeiten $v_o : v_m$ an der Entnahmestelle für den Volumenstrom $V_K$ des an Feststoff angereicherten Flüssigmediums eingehalten wird. Zur Erzeugung der lokalen Strömungen werden an definierten Stellen im Systembecken Strömungsmaschinen, vorzugsweise Rührwerke, Propeller, Impeller und/oder Kreiselpumpen erfindungsgemäß eingesetzt.

In Lackierbetrieben, insbesondere im Automobilbau, werden derzeit ein- oder mehrere lösungsmittel- oder wasserbasierte Lackschichten auf die Bauteile aufgespritzt. Bei einer solchen Applikation von Lacken, Wachsen oder ähnlichen, nicht wasserlöslichen organischen Beschichtungsmitteln auf metallische Oberflächen oder Kunststoffoberflächen gelingt es nicht, die Lacke bzw. Beschichtungsmittel restlos auf die zu beschichtenden Teile aufzubringen. Derjenige Anteil des Lacks, der sich nicht wie erwünscht auf den Bauteilen niederschlägt, wird aus der Abluft oder von den Wänden der Lackierkabinen mittels eines Wasservorhangs aus den Lackspritzkabinen entfernt und in ein sog. Systembecken oder auch Beruhigungsbecken genannt gespült. Dabei erfolgt die Entklebung der verspritzten und vom Wasser aufgenommenen Lackpartikel ("Lack-Overspray") und deren Agglomeration zu einem austragungsfähigen Koagulat in einem Arbeitsgang und bereits während des Auswaschprozesses, jedoch spätestens im Systembecken. Je nach Anlagenkonfiguration und Verfahrensführung flotieren oder sedimentieren die entklebten und koagulierten Lackpartikel, so dass sie kontinuierlich mit geeigneten Austragvorrichtungen und/oder Separatoren aus dem Systembecken ausgetragen und wiederverwertet oder entsorgt werden können. Die an Koagulat abgereicherte wässrige Phase wird ebenfalls kontinuierlich als Umlaufwasser in die Lackierkabine zurückgespeist, so dass ein Kreislaufsystem realisiert ist. In einer Lackieranlage mit einem Volumen des Systembeckens von ca. 50-200 m³ wird das Umlaufwasser mit einem Volumenstrom von typischerweise ca. 500-2000 m³/h im Kreislauf geführt. Damit das Umlaufwasser dabei möglichst lange wiederverwendet werden kann, müssen die Lackteilchen im Systembecken zum einen vollständig koaguliert sein und zum anderen möglichst effektiv von der wässrigen Phase abgetrennt werden. Letzteres beruht nach erfolgter Koagulation einzig auf einer wirksamen physikalischen Trennung in einem Sedimentations- oder Flotationsprozess. Die Effektivität dieser Prozesse wird jedoch stark von der Auslegung des Systembeckens und der für die Aufrechterhaltung des Kreislaufsystems notwendigen beteiligten Volumenströme mitbestimmt.

Die Nassauswaschung des Lack-Oversprays erfolgt in der Lackierkabine durch die turbulente Vermischung des Umlaufwassers mit dem Aerosol des "Oversprays" mittels einer Venturi-Öffnung im Umluftkanal der Lackierkabine. Dabei entsteht ein Luft-Wasser Gemisch enthaltend die grob und/oder fein dispergierten Lackpartikel als Feststoffanteil, das eine im Vergleich zum Umlaufwasser im Systembecken erniedrigte Dichte hat. Die Einspeisung des Luft-Wasser Gemisches zur Koagulation und physikalischen Trennung in das Systembecken mit einem vorgegebenen Volumenstrom hat demnach zur Folge, dass sich dieses Luft-Wasser Gemisch an der Einlassstelle des Systembeckens aufgrund der niedrigeren Dichte unmittelbar nach oben bewegt und dabei eine schnelle Oberflächenströmung verursacht. Dies wiederum hat zur Folge, dass die ausgewaschenen Lackpartikel im Flotationsbetrieb aufgrund der geringen Verweilzeit nicht ausreichend koagulieren und/oder nicht hinreichend flotieren. Umgekehrt erfahren koagulierte Partikel bei einer zu niedrigen Oberflächenfließgeschwindigkeit eine zu geringe Verwirbelung mit der Aussenluft, was die Flotation zugunsten einer Sedimentation der Feststoffe im Systembecken verschiebt. Speziell im Flotationsbestrieb einer Lackieranlage mit Auswaschung von Lack-Overspray bestehen also durch die Einspeisung des Luft-Wasser Gemisches enthaltend die Lackpartikel mit vergleichsweise geringerer Dichte erhebliche Nachteile, die eine effektive Abtrennung der Lackpartikel im Systembecken verhindern oder verfahrenstechnisch erschweren.

Im Stand der Technik wird zur Überwindung dieser Nachteile mit Hilfe von durchströmbaren Wehren Einfluss auf die Fließdynamik im Systembecken der Lackieranlage genommen. Ein durchströmbares Wehr stellt ein Strömungswiderstand entgegen der vorherrschenden Fließrichtung dar, so dass eine Verlangsamung der Oberflächenfließgeschwindigkeit erreicht wird. Ein solches Wehr kann jedoch nur für eine bestimmte Betriebsart und für einen vorgesehenen Volumenstrom des Umlaufwassers realisiert werden. Ein kontrolliertes Anpassen des Wehres auf eine variierende Fließdynamik im Systembecken ist ohne erheblichen verfahrenstechnischen Aufwand nicht möglich. Ein weiterer Nachteil besteht darin, dass die durch das Wehr zusätzlich bewirkte Umwälzung des Umlaufwassers unterbleibt, sobald der Kreislauf für einen bestimmten Zeitraum unterbrochen wird. In einem solchen Fall kann der Sauerstoffgehalt im Systembecken auf solche Werte absinken, die anaeroben Bedingungen gleichkommen. Damit findet aber auch ein Wechsel in der dominierenden Population von Mikroorganismen im Systembecken statt. Waren zuvor also während des Betriebes des Systembeckens aufgrund einer ständigen Umwälzung des Umlaufwassers aerobe Mikroorganismen vorherrschend, so beginnen während längerer Betriebspausen anaerobe Mikroorganismen zu dominieren. Die Kontrolle der Mikroorganismen in der Lackieranlage und insbesondere auch im Systembecken ist technisch bedeutend, da Mikroorganismen zum einen in der Lage sind, den CSB-Wert im Umlaufwasser konstant niedrig zu halten, aber zum anderen auch für die Erhöhung der Viskosität durch mikrobiell produzierte Polysaccharide im Umlaufwasser verantwortlich sind, so dass Koagulation, Sedimentation und Pumpbarkeit des Flüssigmediums im Umlaufwasser erschwert werden. Diese sogenannten Exopolysaccharide, d.h. Bioschleim, werden insbesondere von einem Teil dieser Mikroorganismen unter Stress, also wechselnden äußeren Bedingungen wie absinkendem Sauerstoffgehalt, produziert. Zusätzlich wachsen unter anaeroben Bedingungen solche Mikroorganismen bevorzugt, die Fäulnisgase entwickeln und dies in gesundheitsschädlichen Konzentrationen. Typischerweise sind im offenen Kreislaufsystem Mikroorganismen in der Größenordnung von $10^8$/ml im Umlaufwasser zu finden.

Des Weiteren wird in dem deutschen Gebrauchsmuster DE 86 29 601 U1 eine Vorrichtung zur Aufarbeitung von Schlammwasser offenbart, bei der in einem Systembecken über Flotation eine Abtrennung der Lackschwebeteilchen erfolgt. Im Systemtank liegt im Bereich der Wasseroberfläche eine gerichtete Horizontalströmung vor, die durch die Zuführung des Lackschlamm-Wassergemisch und die Abführung des gereinigten Wassers jeweils im Bereich der Wasseroberfläche an gegenüberliegenden Seiten des Systembeckens hervorgerufen wird. Zusätzlich wird im vorderen Abschnitt des Systembeckens eine im wesentlichen aufwärts gerichtete Luftblasenströmung erzeugt, die die Lackteilchen an die Wasseroberfläche führt.

Die deutsche Offenlegungsschrift DE 103 45 332 A1 offenbart ebenfalls ein Verfahren zur Aufbereitung von Schlammwasser, bei dem die Flotation dadurch unterstützt wird, dass eine Saugströmung auf dem Boden des Systembeckens erzeugt wird, die nicht bis zur Wasseroberfläche reicht, um sedimentierten oder sedimentierenden Lackschlamm erneut in das Systembecken im Bereich der Wasseroberfläche einzuspeisen.

Trotz des bestehenden Standes der Technik besteht weiterhin ein Bedarf darin, die Effizienz der Flotation durch Einflußnahme auf die Fließdynamik im Systembecken einer Lackieranlage zu steigern, so dass eine weitgehend vollständige Abtrennung von Lackkoagulat aus dem Flüssigmedium bzw. aus dem Umlaufwasser ermöglicht wird.

Diese Aufgabe wird gelöst durch ein Verfahren zur Abtrennung von Feststoffen im Systembecken von Lackieranlagen, bei dem das Luft-Wasser Gemisch enthaltend einen grob und/oder fein dispergierten Feststoffanteil mit vorgegebenem Volumenstrom $V_E$ von der Lackierkabine in das Systembecken überführt wird, in dem die physikalische Trennung von Feststoff und Flüssigmedium über Flotation erfolgt, wobei

(i) an den Stellen $A_n$ im Systembecken Strömungen erzeugt werden, und
(ii) gleichzeitig dem Systembecken kontinuierlich das an Feststoff angereicherte Flüssigmedium mit vorgegebenen Volumenstrom $V_K$ entnommen wird, wobei die Entnahmestelle für den Volumenstrom $V_K$ in vorherrschender Fließrichtung hinter den Stellen $A_n$, an denen die Strömungen erzeugt werden, im Systembecken angeordnet ist, während das an Feststoff abgereicherte Flüssigmedium kontinuierlich mit einem Volumenstrom $V_A$ in die Lackierkabine zurückgespeist wird, in der das an Feststoff abgereicherte Flüssigmedium und gegebenenfalls ein weiterer Teil Wasser mit dem abzutrennenden Feststoffen und der Luft zu einem Luft-Wasser Gemisch enthaltend einen grob und/oder fein dispergierten Feststoffanteil vermengt und sodann mit dem Volumenstrom $V_E$ in das Systembecken überführt wird, dadurch gekennzeichnet, dass die Strömungen an den Stellen $A_n$ im Systembecken derart eingestellt sind, dass das Verhältnis der Fließgeschwindigkeit $v_o$ an der Oberfläche an der Stelle im Systembecken, an der das an Feststoff angereicherte Flüssigmedium mit vorgegebenen Volumenstrom $V_K$ entnommen wird, zur theoretischen mittleren Fließgeschwindigkeit $v_m$ nicht größer als 5 : 1, aber nicht kleiner als 3 : 2 ist.

Durch die Einstellung der Strömungen an den Stellen $A_n$ wird im erfindungsgemäßen Verfahren gewährleistet, dass die Oberflächenfließgeschwindigkeit in einem Bereich gehalten wird, der eine optimale Abtrennung der Feststoffe im Flotationsverfahren ermöglicht. Bei zu hohen Oberflächenfließgeschwindigkeiten ist die Flotationszeit für Flüssigkeitsvolumina von der Einlassstelle bis zur Entnahmestelle für das mit Feststoff angereicherte Flüssigmedium zu kurz und damit ineffektiv, während zu niedrige Oberflächenfließgeschwindigkeiten die oberen Flüssigkeitsschichten nicht ausreichend verwirbeln, so dass der Flotationsprozess in Einzelfällen nicht in Gang gehalten wird. Dementsprechend begünstigen niedrige Verhältnisse von Oberflächenfließgeschwindigkeit $v_o$ zur theoretischen mittleren Fließgeschwindigkeit $v_m$ unterhalb von 3 : 2 die Sedimentation.

Unter Feststoff sind im Rahmen der vorliegenden Erfindung insbesondere Lackbestandteile umfasst, die aus der Lackierkabine herausgewaschen und in das Systembecken überführt werden. Lackbestandteile sind dabei zumeist organische Polymere, Polymeragglomerate oder Latizes, die in Form kleinster Partikel im Flüssigmedium bzw. in der wässrigen Phase dispergiert oder suspendiert vorliegen.

Das Systembecken enthält das Flüssigmedium bzw. das Umlaufwasser und ist erfindungsgemäß dasjenige Becken, insbesondere einer Lackieranlage, in das ein Luft-Wasser Gemisch enthaltend einen grob und/oder fein dispergierten Feststoffanteil eingeleitet wird, wobei der Volumenstrom und die Fließgeschwindigkeit im Systembecken stark verringert werden, so dass der Feststoffanteil durch Koagulation im Zusammenwirken mit physikalischen Trennverfahren effektiv vom Flüssigmediums entfernt werden kann. Die Abtrennung des Feststoffanteils erfolgt im Systembecken über Flotation. Das Systembecken enthält als solches neben der Einlassstelle für das Luft-Wasser Gemisch enthaltend einen grob und/oder fein dispergierten Feststoffanteil, zumindest eine Auslassstelle für das an Feststoffen abgereicherte Flüssigmedium und zumindest eine Vorrichtung, die das an Feststoff angereicherte Flüssigmedium kontinuierlich entnimmt.

Erfindungsgemäß enthält das Systembecken zusätzlich an den Stellen $A_n$ jeweils eine Vorrichtung, die lokal eine Strömung erzeugt, wobei die Anzahl der Stellen $A_n$ gleich n ist und n eine ganze natürliche Zahl größer oder gleich eins ist. Die Anzahl n der Vorrichtungen und damit die Anzahl n der Stellen $A_n$ hängt unmittelbar von der Leistungsfähigkeit der jeweiligen Vorrichtung zur lokalen Erzeugung von Strömungen, dem Volumenstrom $V_E$ an der Einlassstelle und den baulichen Dimensionen des Systembeckens ab.

Die vorherrschende Fließrichtung im Systembecken wird erfindungsgemäß durch die an einer bestimmten Stelle im Systembecken vorliegende Oberflächenströmungsrichtung, die allein durch die Geometrie des Systembeckens und die Volumenströme $V_E$, $V_A$ und $V_K$ vorgegeben ist. Die vorherrschende Fließrichtung kann demgemäß mit Schwimmkörpern, die in ein Systembecken im Betrieb gegeben werden, bei dem an den Stellen $A_n$ keine lokalen Strömungen erzeugt werden, an jeder Stelle im Systembecken bestimmt werden. Üblicherweise erzwingt die Geometrie von quaderförmigen Systembecken eine nahezu einheitliche Fließrichtung im Systembecken, die durch die Richtung von der Einlassstelle des Volumenstromes $V_E$ zur Entnahmestelle des Volumenstromes $V_A$ bzw. durch die kürzeste Verbindung zwischen den parallelen Stirnflächen an der Einlassstelle und der Entnahmestelle vorgegeben ist.

Die Fließgeschwindigkeit $v_o$ an der Oberfläche kann an jeder Stelle im Systembecken mittels Schwimmkörper bestimmt werden und entspricht der Geschwindigkeit des Schwimmkörpers beim Passieren der jeweiligen Stelle bestimmt aus dem Zeitintervall für das Zurücklegen einer bestimmten im Vergleich zur Länge des Systembecken kleinen Strecke, vorzugsweise einer Strecke, die nicht größer als 1/10 der Länge des Systembeckens ist. Die theoretische mittleren Fließgeschwindigkeit $v_m$ ist erfindungsgemäß diejenige theoretische Geschwindigkeit, die sich aus dem Quotienten des Volumenstromes $V_E$ am Einlass des Systembeckens zum Gesamtfüllvolumen S des Systembeckens multipliziert mit der Länge des Systembecken in vorherrschender Fließrichtung ergibt:

$$v_m = \frac{V_E}{S} \bullet l$$

mit $v_m$: theoretische mittlere Fließgeschwindigkeit [m/h]
$V_E$: Volumenstrom am Einlass des Systembeckens (Einspeisevolumenstrom) [m³/h]
S: Gesamtfüllvolumen des Systembeckens [m³]
l: Länge des Systemtanks in vorherrschender Fließrichtung [m]

Die Länge des Systembeckens ist erfindungsgemäß die kürzeste Strecke, die die Einlassstelle für den Volumenstrom $V_E$ mit der Entnahmestelle für den Volumenstrom $V_A$ in der vorherrschenden Fließrichtung verbindet und kann ebenfalls mittels Schwimmkörpern bestimmt werden. In quaderförmigen Systembecken ist die Länge des Systembeckens der Abstand zwischen den zueinander parallelen Stirnflächen an der Einlass- und Entnahmestelle für die Volumenströme $V_E$ und $V_A$. Quaderförmige Systembecken, deren Gesamtfüllvolumen durch die Füllhöhe, Systembeckenbreite und Systembeckenlänge bestimmt ist, sind im erfindungsgemäßen Verfahren bevorzugt.

Je nach Flotationsanlage bzw. Systembecken und Volumenstrom an der Einlassstelle sind daher vorzugsweise zwei Betriebsarten der Vorrichtungen, die an den Stellen $A_n$ im Systembecken lokal Strömungen erzeugen für eine erfindungsgemäße Prozessführung notwendig.

Liegt das Verhältnis der Fließgeschwindigkeiten $v_o$: $v_m$ an der Entnahmestelle für den Volumenstrom $V_K$ des an Feststoff angereicherten Flüssigmediums ohne den Einfluss der lokal erzeugten Strömungen an den Stellen An oberhalb von 5 : 1, so werden im Schritt i) des erfindungsgemäßen Verfahrens an den Stellen $A_n$ der vorherrschenden Fließrichtung zumindest partiell entgegengesetzte Strömungen erzeugt, während bei Unterschreiten eines Verhältnis der Fließgeschwindigkeiten $v_o$ : $v_m$ von 3 : 2 ohne den Einfluss der lokal erzeugten Strömungen an den Stellen $A_n$ an denselbigen der vorherrschenden Fließrichtung zumindest partiell gleichgerichtete Strömungen erzeugt werden.

Die an den Stellen $A_n$ der vorherrschenden Fließrichtung zumindest partiell entgegengesetzten oder zumindest partiell gleichgerichteten Strömungen sind in Abhängigkeit von dem Volumenstrom $V_E$ an der Einlassstelle, den Volumenströmen $V_K$ und $V_A$ an den jeweiligen Entnahmestellen und den baulichen Dimensionen des Systembeckens bevorzugt so eingestellt, dass das Verhältnis der Fließgeschwindigkeit $v_o$ an der Oberfläche an der Stelle im Systembecken, an der das an Feststoff angereicherte Flüssigmedium mit vorgegebenen Volumenstrom $V_K$ entnommen wird, zur theoretischen mittleren Fließgeschwindigkeit $v_m$, die sich aus dem Quotienten des Volumenstromes $V_E$ am Einlass des Systembeckens zum Gesamtfüllvolumen S des Systembeckens multipliziert mit der Länge des Systembecken in vorherrschen-

der Fließrichtung als

$$\nu_m = \frac{V_E}{S} \cdot l$$

.

mit $\nu_m$: theoretische mittlere Fließgeschwindigkeit [m/h]
$V_E$: Volumenstrom am Einlass des Systembeckens (Einspeisevolumenstrom) [m³/h]
S: Gesamtfüllvolumen des Systembeckens [m³]
I: Länge des Systemtanks in vorherrschender Fließrichtung [m]
ergibt, vorzugsweise nicht größer als 3 : 1 ist.

Erfindungsgemäß werden zur Erzeugung der im Schritt (i) zur vorherrschenden Fließrichtung partiell entgegengesetzten oder partiell gleichgerichteten Strömungen an den jeweiligen Stellen $A_n$ Strömungsmaschinen eingesetzt, die eine mechanische Arbeit aufnehmen und diese in Form von Strömungsenergie an das sie umgebende Flüssigmedium abgeben. Hierzu geeignet sind insbesondere Vorrichtungen bestehend aus Rührwerken, Propellern, Impellern und/oder Kreiselpumpen. Die Strömungsmaschinen werden im erfindungsgemäßen Verfahren an den Stellen $A_n$ montiert und erzeugen an der jeweiligen Stelle $A_n$ eine Strömung, die der vorherrschenden Fließrichtung zumindest partiell entgegengesetzt oder gleichgerichtet ist, vorzugsweise nicht unterhalb der Einlassstelle des Volumenstromes $V_E$ in das Systembecken. Besonders bevorzugt ist eine oberflächennahe Erzeugung der Strömungen an den Stellen $A_n$, beispielsweise durch auf dem Flüssigmedium aufschwimmende Strömungsmaschinen. Die Erzeugung einer der vorherrschenden Fließrichtung entgegengesetzten oder gleichgerichteten Strömung unmittelbar an der Oberfläche des Flüssigmediums bewirkt eine besonders stark ausgeprägte Reduktion der Oberflächenfließgeschwindigkeit. Als oberflächennahe Erzeugung einer entgegengesetzten oder gleichgerichteten Strömung ist im Sinne der vorliegenden Erfindung eine solche aufzufassen, die nicht unterhalb der halben Strecke zwischen Einlassstelle und Füllstandshöhe im Systembecken erzeugt wird.

Idealerweise beträgt im erfindungsgemäßen Verfahren der Abstand zwischen der Stelle, an der das Luft-Wasser Gemisch enthaltend einen grob und/oder fein dispergierten Feststoffanteil in das Systembecken eintritt, und der jeweiligen Stelle $A_n$, an der eine der vorherrschenden Fließrichtung zumindest partiell entgegengesetzte oder zumindest partiell gleichgerichtete Strömung erzeugt wird, nicht mehr als die halbe Länge des Systembeckens in Fließrichtung, vorzugsweise nicht mehr als ein Drittel der Länge des Systembeckens in Fließrichtung, so dass zumindest die halbe Länge des Systembeckens, vorzugsweise zwei Drittel der Länge des Systembeckens als Beruhigungszone mit homogener Fließdynamik zur Verfügung stehen, in der das Flotat sich homogen ausbilden und mit dem Volumenstrom $V_K$

entnommen werden kann.

Vorzugsweise ist die Entnahmestelle für den Volumenstrom $V_A$ des an Feststoff abgereicherten Flüssigmediums in vorherrschender Fließrichtung hinter der Entnahmestelle für den Volumenstrom $V_K$ zur Entfernung des an Feststoff angereicherten Flüssigmediums im Systembecken angeordnet ist und befindet sich vorzugsweise an der Stirnfläche des Systemsbecken, die derjenigen am Einlass des Systembeckens gegenüber liegt.

Das Systembecken hat im erfindungsgemäßen Verfahren vorzugsweise eine quaderförmige Geometrie, wobei das Verhältnis von mittlerer Füllhöhe zur Länge des Systembeckens in vorherrschender Fließrichtung vorzugsweise zumindest 1 :-5, besonders bevorzugt zumindest 1 : 1 0 und insbesondere mindestens 1 : 15 beträgt.

Im erfindungsgemäßen Verfahren wird durch die Umwälzung des Umlaufwassers mit Hilfe der Strömungsvorrichtungen an den Stellen $A_n$ und den Einlass des Volumenstromes $V_E$ des Luft-Wasser Gemisches stets eine Sättigung des Flüssigmediums mit Sauerstoff erzielt. Auch bei einem Ausfall des Kreislaufsystems, also für den Fall, dass die Volumenströme $V_E$, $V_A$ und $V_K$ gleich null sind, kann durch den Betrieb der Strömungsvorrichtungen an den Stellen $A_n$ diese Sauerstoffsättigung weitgehend aufrechterhalten werden.

Bevorzugt ist in diesem Zusammenhang, dass im erfindungsgemäßen Verfahren solche Strömungsvorrichtungen bzw. Strömungsmaschinen verwendet werden, die über einen Zugang zur Außenluft eine Strömung eines Luft-Wasser Gemisches an der jeweiligen Stelle $A_n$ erzeugen. Dadurch kann die Sauerstoffsättigung im Systembecken auch in Betriebspausen der Lackieranlage kontrolliert und konstant gehalten werden, um das aerobe mikrobielle Milieu zu stabilisieren. Das Erzeugen einer Strömung mittels eines Luft-Wasser Gemisches hat darüber hinaus für den Flotationsprozess den zusätzlichen Vorteil, dass die Flotation in dem Bereich des Systembeckens von der Einlassstelle bis zur Entnahmestelle für den Volumenstrom $V_K$ mit an Feststoff angereichertem Flüssigmedium deutlich unterstützt wird und damit eine vollständigere Trennung des Feststoffanteils herbeigeführt werden kann. Grundsätzlich sind daher solche erfindungsgemäßen Verfahren besonders bevorzugt, in denen im Schritt (i) im Systembecken an den Stellen $A_n$ der vorherrschenden Fließrichtung zumindest partiell entgegengesetzte oder zumindest partiell gleichgerichtete Strömungen eines Luft-Wasser Gemisches mit Hilfe von Strömungsmaschinen erzeugt werden, die einen Zugang zur Außenluft aufweisen, wobei die Strömungsmaschinen an den Stellen $A_n$ so eingestellt sind, dass das Verhältnis der Fließgeschwindigkeit $v_o$ an der Oberfläche an der Stelle im Systembecken, an der das an Feststoff angereicherte Flüssigmedium mit vorgegebenen Volumenstrom $V_K$ entnommen wird, zur theoretischen mittleren Fließgeschwindigkeit $v_m$, die sich aus dem Quotienten des Volumenstromes $V_E$ am Einlass des Systembeckens zum Gesamtfüllvolumen S des Systembeckens multipliziert mit der Länge des Systembecken in vorherrschender Fließrichtung ergibt, nicht größer als 5 : 1 und vorzugsweise nicht kleiner als 3 : 2 ist oder, falls die Volumenströme $V_E$, $V_A$ und $V_K$ an der Einlassstelle gleich Null sind, der gelöste Sauerstoffgehalt im Systembecken nicht unterhalb eines vorgegebenen Wertes sinkt, vorzugsweise nicht unterhalb von 3 mg/l $O_2$, besonders bevorzugt nicht unterhalb von 6 mg/l $O_2$.

Figurenbezeichnung:

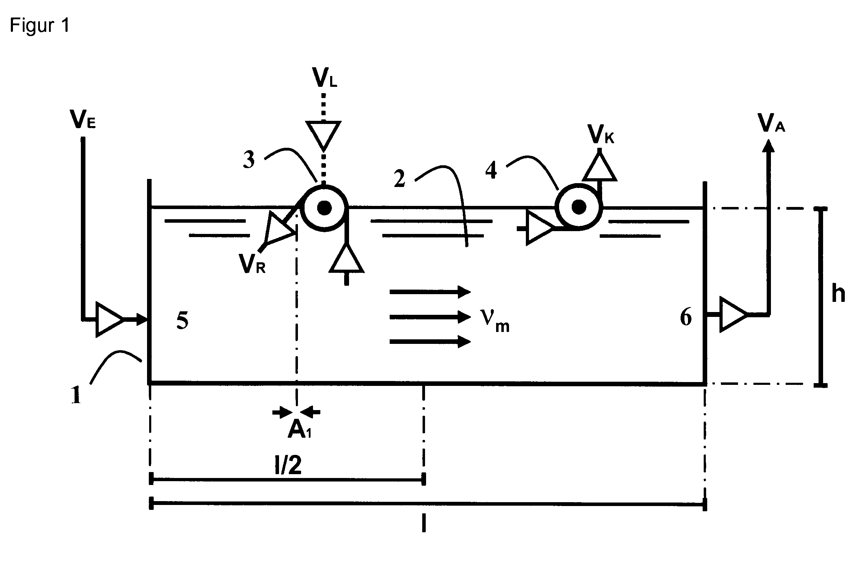

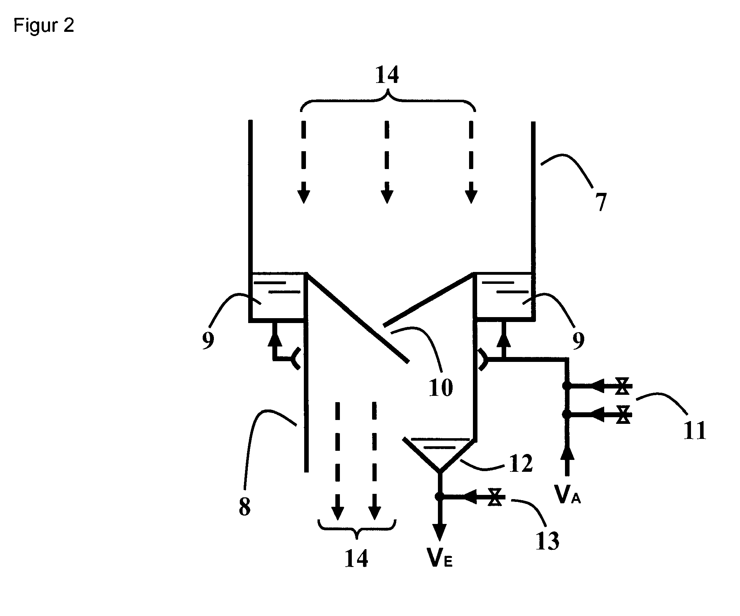

Figur 1 stellt eine schematische Zeichnung des erfindungsgemäßen Verfahrens zum Betrieb einer Flotationsanlage dar, bei der das Verhältnis der Fließgeschwindigkeiten $v_o : v_m$ an der Entnahmestelle für den Volumenstrom $V_K$ des an Feststoff angereicherten Flüssigmediums ohne den Einfluss der Strömungen an den Stellen $A_n$ oberhalb von 5 : 1 liegt. Hierbei wird an einer Einlassstelle 5 eines Systembeckens 1 ein Luft-Wasser Gemisch enthaltend einen grob- und/oder feindispergierten Feststoffanteil eingespeist. In der ersten Hälfte des Systembeckens 1 und in der vorherrschenden Fließrichtung, die in der Figur 1 durch $v_m$ gekennzeichnet ist, maximal I/2 von der Einlassstelle 5 entfernt, befindet sich eine auf der Flotationslösung (Flüssigmedium) 2 aufschwimmende Kreiselpumpe 3. Die Kreiselpumpe 3 entnimmt orthogonal zur vorherrschenden Fließrichtung Flotationslösung 2 aus dem Flotationsbecken 1 und speist einen Volumenstrom $V_R$, der zumindest partiell der vorherrschenden Fließrichtung entgegengesetzt ist, in das Flotationsbecken 1 an der Stelle $A_1$ zurück und vermindert so die Strömungsgeschwindigkeit an der Oberfläche der Flotationslösung 2, wodurch das erfindungsgemäße Verhältnis der Fließgeschwindigkeiten $v_o : v_m$ eingestellt und damit der Flotationsprozess optimiert wird. Über einen Zugang zur Außenluft wird zusätzlich ein Luftstrom $V_L$ mit dem Volumenstrom $V_R$ in das Flotationsbecken 1 an der Stelle $A_1$ zurückgespeist, wodurch die Belüftung des Flotationsbeckens 1 auch in Betriebspausen der Lackieranlage und eine verbesserte Flotation gewährleistet wird. Eine solche aufschwimmende Kreiselpumpe, die über einen Zugang zur Außenluft eine Strömung eines Luft-Wasser Gemisches erzeugt, ist in der deutschen Anmeldung DE 10104329 beschrieben. Eine in der vorherrschenden Fließrichtung hinter der Kreiselpumpe 3 angeordnete ebenfalls auf der Flotationslösung 2 aufschwimmende Kreiselpumpe 4 entnimmt unmittelbar an der Oberfläche der Flotationslösung 2 einen Volumenstrom $V_K$ und entfernt so das aufschwimmende Flotat. An der der Einlassstelle 5 gegenüberliegenden Stirnfläche des quaderförmigen Flotationsbeckens 1 befindet sich eine Auslassstelle 6 für den Volumenstrom $V_A$, der die an grob- und/feindispergierten Feststoffanteil abgereicherte Flotationslösung 2 in den Teil der Lackieranlage zurückspeist, der die abgereicherte Flotationslösung 2 und gegebenenfalls einen weiteren Teil Wasser mit dem abzuscheidenden Feststoffanteil und der Luft zu einem Luft-Wasser Gemisch enthaltend einen grob und/oder fein dispergierten Feststoffanteil vermengt (siehe Figur 2).

Figur 2 betrifft den spezifischen Teil einer Lackieranlage, im folgenden Abscheider genannt, der die Auswaschung von Feststoffpartikeln aus einem Luftstrom unter Erzeugung eines Luft-Wasser Gemisches enthaltend einen grob und/oder feindispergierten Feststoffanteil bewirkt, wobei anschließend das Luft-Wasser Gemisch mit dem Volumenstrom $V_E$ in das Systembecken 1 an der Einlassstelle 5 einspeist wird. Hierzu wird die an grob- und/oder feindispergierten Feststoffanteil abgereicherte Flotationslösung 2 mit dem Volumenstrom $V_A$ an der Auslassstelle 6 des Flotationsbeckens 1 entnommen und in einen Überlauf 9 einer ersten Halbkammer 7 des Abscheiders eingespeist. Optional kann dem Volumenstrom $V_A$ noch ein weiterer Teil Wasser und/oder ein Koagulans über Dosierleitungen 11 hinzugegeben werden. Vom Überlauf 9 gelangt die Flotationslösung 2 in einen Luftstrom 14, der den abzutrennenden Feststoffanteil enthält und demnach ein Aerosol darstellt, und wird über eine Querschnittsverengung 10 der ersten Halbkammer 7 in die zweite Halbkammer 8 geführt, die unterhalb der ersten Halbkammer 7 angeordnet ist. Dabei findet eine innige Vermischung der abgereicherten Flotationslösung und des Aerosols statt. Zur Erhöhung des Unterdrucks der zweiten Halbkammer 8 relativ zur ersten Halbkammer 7 ist die vom Luftstrom 14 durchströmte Fläche in der zweiten Halbkammer 8 kleiner als in der ersten Halbkammer 7. Ein Luft-Wasser Gemisch wird sodann in der zweiten Halbkammer 2 von einem trichterförmigen Becken 12 aufgenommen und von dort mit dem Volumenstrom $V_E$ über die Einlassstelle 5 in das Systembecken 1 eingespeist. Optional kann dem Volumenstrom $V_E$ noch ein Entschäumer zur Regelung der Schaumbildung über eine Dosierleitung 13 hinzugegeben werden.

Bezugszeichenliste

1:     Systembecken

2:     Flotationslösung

3:     Kreiselpumpe, schwimmend zur Rückspeisung des Volumenstromes $V_R$

4:     Kreiselpumpe, schwimmend zur Entfernung des Flotats mit dem Volumenstrom $V_K$

5:     Einlassstelle des Luft-Wasser Gemisches enthaltend einen grob und/oder feindispergierten Feststoffanteil mit dem Volumenstromes $V_E$ in das Systembecken

6:     Auslassstelle der an grob und/oder feindispergierten Feststoffanteil abgereicherten Flotationslösung mit dem Volumenstromes $V_A$ aus dem Systembecken

7:    Erste Halbkammer

8:    Zweite Halbkammer

9:    Überlauf der mit dem Volumenstrom $V_A$ zurückgespeisten Flotationslösung und ggf. einem Teil Wasser

10:    Querschnittseinengung (Venturi-Öffnung)

11:    Dosiereinheiten zur Einspeisung eines zusätzlichen Teils Wasser und/oder eines Koagulans zum Volumenstrom $V_A$ der Flotationslösung

12:    Auffangtrichter für das Luft-Wasser Gemisch enthaltend einen grob und/oder feindispergierten Feststoffanteil

13:    Dosiereinheit zur Einspeisung eines Entschäumers zum Volumenstrom $V_E$ des Luft- Wasser Gemisches

14:    Luftstrom durch die erste und zweite Halbkammer

## Patentansprüche

1. Verfahren zur Abtrennung von Feststoffen im Systembecken (1) von Lackieranlagen, bei dem das Luft-Wasser Gemisch enthaltend einen grob und/oder fein dispergierten Feststoffanteil mit vorgegebenem Volumenstrom $V_E$ von der Lackierkabine in das Systembekken (1) überführt wird, in dem die physikalische Trennung von Feststoff und Flüssigmedium über Flotation erfolgt, wobei

> (i) an den Stellen $A_n$ im Systembecken (1) Strömungen erzeugt werden, und
> (ii) gleichzeitig dem Systembecken (1) kontinuierlich das an Feststoff angereicherte Flüssigmedium mit vorgegebenen Volumenstrom $V_K$ entnommen wird, wobei die Entnahmestelle für den Volumenstrom $V_K$ in vorherrschender Fließrichtung hinter den Stellen $A_n$, an denen die Strömungen erzeugt werden, im Systembecken (1) angeordnet ist, während das an Feststoff abgereicherte Flüssigmedium kontinuierlich mit einem Volumenstrom $V_A$ in die Lackierkabine zurückgespeist wird, in der das an Feststoff abgereicherte Flüssigmedium und gegebenenfalls ein weiterer Teil Wasser mit dem abzutrennenden Feststoffen und der Luft zu einem Luft-Wasser Gemisch enthaltend einen grob und/oder fein dispergierten Feststoffanteil vermengt und sodann mit dem Volumenstrom $V_E$ in das Systembecken (1) überführt wird,

**dadurch gekennzeichnet, dass**
die Strömungen an den Stellen $A_n$ im Systembecken (1) derart eingestellt sind, dass das Verhältnis der Fließgeschwindigkeit $v_o$ an der Oberfläche an der Stelle im Systembecken (1), an der das an Feststoff angereicherte Flüssigmedium mit vorgegebenen Volumenstrom $V_K$ entnommen wird, zur theoretischen mittleren Fließgeschwindigkeit $v_m$ nicht größer als 5 : 1, aber nicht kleiner als 3 : 2 ist.

2. Verfahren gemäß Anspruch 1, **dadurch gekennzeichnet, dass** zur Einstellung des Verhältnisses der Fließgeschwindigkeit $v_o$ zur theoretischen mittleren Fließgeschwindigkeit $v_m$ an den Stellen $A_n$ der vorherrschenden Fließrichtung entweder zumindest partiell entgegengesetzte Strömungen erzeugt werden, wenn das besagte Verhältnis der Fließgeschwindigkeiten ohne den Einfluss der erzeugten Strömungen an den Stellen $A_n$ größer als 5 : 1 ist, oder der vorherrschenden Fließrichtung zumindest partiell gleichgerichtete Strömungen erzeugt werden, wenn das besagte Verhältnis der Fließgeschwindigkeiten ohne den Einfluss der erzeugten Strömungen an den Stellen $A_n$ kleiner als 3 : 2 ist.

3. Verfahren gemäß einem oder beiden der vorherigen Ansprüche, **dadurch gekennzeichnet, dass** die Entnahmestelle (6) für den Volumenstrom $V_A$ des an Feststoff abgereicherten Flüssigmediums in vorherrschender Fließrichtung hinter der Entnahmestelle für den Volumenstrom $V_K$ zur Entfernung des an Feststoff angereicherten Flüssigmediums im Systembecken (1) angeordnet ist und sich vorzugsweise an der Stirnfläche des Systemsbeckens (1) befindet, die derjenigen am Einlass des Systembekkens (1) gegenüber liegt.

4. Verfahren gemäß einem oder mehreren der vorherigen Ansprüche, **dadurch gekennzeichnet, dass** die jeweiligen Strömungen an den Stellen $A_n$ nicht unterhalb der Einlassstelle (5) des Volumenstromes $V_E$ in das Systembecken (1) an der jeweiligen Stelle $A_n$ erzeugt werden.

5. Verfahren gemäß einem oder mehreren der vorherigen Ansprüche, **dadurch gekennzeichnet, dass** der Abstand zwischen der Stelle, an der das Luft-Wasser Gemisch enthaltend einen grob und/oder fein dispergierten Feststoffanteil in das Systembekken (1) eintritt, und der jeweiligen Stelle $A_n$, an der eine der vorherrschenden Fließrichtung zumindest partiell entgegengesetzte oder gleichgerichtete Strömung erzeugt wird, nicht mehr als die halbe Länge des Systembeckens (1) in Fließrichtung beträgt, vorzugsweise nicht mehr als ein Drittel der Länge des Systembeckens (1) in Fließrichtung.

**6.** Verfahren gemäß einem oder mehreren der vorherigen Ansprüche, **dadurch gekennzeichnet, dass** im Schritt (i) die der vorherrschenden Fließrichtung zumindest partiell entgegengesetzten oder gleichgerichteten Strömungen an den Stellen $A_n$ durch Strömungsmaschinen erzeugt werden, die eine mechanische Arbeit aufnehmen und diese in Form von Strömungsenergie an das sie umgebende Flüssigmedium abgeben.

**7.** Verfahren gemäß Anspruch 6, **dadurch gekennzeichnet, dass** als Strömungsmaschinen (3) Rührwerke, Propeller, Impeller und/oder Kreiselpumpen eingesetzt werden.

**8.** Verfahren gemäß einem oder beiden der vorherigen Ansprüche 6 und 7, **dadurch gekennzeichnet, dass** die jeweilige Strömungsmaschine über einen Zugang zur Außenluft eine Strömung eines Luft-Wasser Gemisches an der jeweiligen Stelle $A_n$ erzeugt, die zumindest partiell der vorherrschenden Fließrichtung im Systembecken (1) entgegengesetzt oder gleichgerichtet ist.

**Claims**

**1.** A method for separating solids in a system tank (1) of paint shops, in which the air-water mixture containing a coarsely and/or finely dispersed solids content is transferred at a given volumetric flow rate $V_E$ from the coating booth into the system tank (1), in which physical separation of solids and liquid medium proceeds by flotation, wherein

> (i) flows are generated at the points $A_n$ in the system tank (1), and
> (ii) the solids-enriched liquid medium is simultaneously continuously withdrawn from the system tank (1) at a given volumetric flow rate $V_K$, the withdrawal point for the volumetric flow $V_K$ being arranged in the system tank (1) downstream in the predominant direction of flow from the points $A_n$, at which the flows are generated, while the solids-depleted liquid medium is continuously returned to the paint booth at a volumetric flow rate $V_A$, in which the solids-depleted liquid medium and optionally a further proportion of water are mixed with the solids to be separated and air to form an air-water mixture containing a coarsely and/or finely dispersed solids content and then transferred into the system tank (1) at the volumetric flow rate $V_E$,

**characterised in that** the flows at the points $A_n$ in the system tank (1) are adjusted such that the ratio of the flow rate $v_o$ at the surface at the point in the system tank (1) where the solids-enriched liquid medium is withdrawn at a predetermined volumetric flow rate $V_K$ to the theoretical average flow rate $v_m$ is no greater than 5:1, but no less than 3:2.

**2.** A method according to claim 1, **characterised in that**, in order to adjust the ratio of the flow rate $v_o$ to the theoretical average flow rate $v_m$ at the points $A_n$ of the predominant direction of flow, either at least partially contrary flows are generated, if said ratio of the flow rates without the influence of the generated flows at points $A_n$ is greater than 5:1, or flows at least partially co-directional with the predominant direction of flow are generated if said ratio of the flow rates without the influence of the generated flows at points $A_n$ is less than 3:2.

**3.** A method according to one or both of the preceding claims, **characterised in that** the withdrawal point (6) for the volumetric flow $V_A$ of the solids-depleted liquid medium is arranged in the system tank (1) downstream in the predominant direction of flow from the withdrawal point for the volumetric flow $V_K$ for removal of the solids-enriched liquid medium and is preferably located on the end face of the system tank (1) which lies opposite the end face at the inlet of the system tank (1).

**4.** A method according to one or more of the preceding claims, **characterised in that** the respective flows at points $A_n$ are not generated at the respective point $A_n$ below the inlet point (5) of the volumetric flow $V_E$ into the system tank (1).

**5.** A method according to one or more of the preceding claims, **characterised in that** the distance between the point at which the air-water mixture containing a coarsely and/or finely dispersed solids content enters the system tank (1), and the respective point $A_n$, at which a flow at least partially contrary to or co-directional with the predominant direction of flow is generated, amounts to no more than half the length of the system tank (1) in the direction of flow, preferably to no more than one third of the length of the system tank (1) in the direction of flow.

**6.** A method according to one or more of the preceding claims, **characterised in that** in step (i) the flows at least partially contrary to or co-directional with the predominant direction of flow are generated at the points $A_n$ by turbo flow machines which absorb mechanical work and release said work into the surrounding liquid medium in the form of flow energy.

**7.** A method according to claim 6, **characterised in that** stirrers, propellers, impellers and/or centrifugal pumps are used as the turbo machines (3).

8. A method according to one or both of the preceding claims 6 and 7, **characterised in that**, via access to external air, the respective turbo machine generates a flow of an air-water mixture at the respective point $A_n$, which flow is at least partially contrary to or co-directional with the predominant direction of flow in the system tank (1).

**Revendications**

1. Procédé pour la séparation de substances solides dans une cuve technique (1) d'installations de peinture, dans lequel on transfère le mélange air-eau contenant une fraction grossière et/ou une fraction finement dispersée de substances solides avec un débit volumiétique prédéfini $V_E$ de la cabine de laquage à la cuve technique (1) dans laquelle a lieu la séparation physique des substances solides et du milieu liquide par flottation, dans lequel

   (i) aux endroits $A_n$ dans la cuve technique (1), on génère des courants ; et
   (ii) dans le même temps, on prélève de la cuve technique (1) en continu le milieu liquide enrichi en substances solides, avec un débit volumiétique prédéfini $V_K$, l'endroit de prélèvement pour le débit volumiétique $V_K$ étant disposé dans la cuve technique (1) dans la direction d'écoulement prédominante, derrière les endroits $A_n$ auxquels les courants sont générés, tandis que le milieu liquide appauvri en substances solides est renvoyé en continu avec un débit volumiétique $V_A$ dans la cabine de peinture dans laquelle on mélange le milieu liquide appauvri en substances solides et le cas échéant une fraction supplémentaire d'eau avec les substances solides à séparer et avec l'air pour obtenir un mélange air-eau contenant une fraction grossière et/ou finement dispersée de substances solides, et on transfère ensuite le mélange avec le débit volumiétique $V_E$ dans la cuve technique (1) ;

   **caractérisé en ce que**
   les courants aux endroits $A_n$ dans la cuve technique (1) sont régulé de telle sorte que le rapport de la vitesse d'écoulement $v_o$ à la surface à l'endroit, dans la cuve technique (1), auquel le milieu liquide enrichi en substances solides est prélevé avec un débit volumiétique prédéfini $V_K$, à la vitesse d'écoulement moyenne théorique $v_m$ n'est pas supérieur à 5 : 1, mais n'est pas inférieur à 3 : 2.

2. Procédé selon la revendication 1, **caractérisé en ce que**, pour le réglage du rapport de la vitesse d'écoulement $v_o$ à la vitesse d'écoulement moyenne théorique $v_m$ aux endroits $A_n$ de la direction d'écoulement prédominante, soit on génère des courants au moins partiellement opposés, lorsque ledit rapport des vitesses d'écoulement, en dehors de l'influence des courants générés aux endroits $A_n$ est supérieur à 5 : 1, soit on génère des courants possédant une orientation au moins partiellement égale à la direction d'écoulement prédominante, lorsque ledit rapport des vitesses d'écoulement en dehors de l'influence des courants générés aux endroits $A_n$ est inférieur à 3 : 2.

3. Procédé selon une des revendications précédentes ou les deux, **caractérisé en ce que** l'endroit de prélèvement (6) pour le débit volumiétique $V_A$ du milieu liquide appauvri en substances solides est disposé, dans la direction d'écoulement prédominante, derrière l'endroit de prélèvement pour le débit volumiétique $V_K$ à des fins d'élimination du milieu liquide enrichi en substances solides dans la cuve technique (1) et se trouve de préférence sur la surface frontale de la cuve technique (1) qui est opposée à celle de l'entrée de la cuve technique (1).

4. Procédé selon une ou plusieurs des revendications précédentes, **caractérisé en ce que** les courants respectifs aux endroits $A_n$ ne sont pas générés en dessous de l'entrée (5) du débit volumiétique $V_E$ dans la cuve technique (1) à l'endroit respectif $A_n$.

5. Procédé selon une ou plusieurs des revendications précédentes, **caractérisé en ce que** la distance entre l'endroit d'entrée du mélange air-eau contenant une fraction grossière et/ou finement dispersée de substances solides dans la cuve technique (1) et l'endroit respectif $A_n$ auquel on génère un courant au moins partiellement opposé ou de même orientation par rapport à la direction d'écoulement prédominante, n'est pas supérieure à la moitié de la longueur de la cuve technique (1) dans la direction d'écoulement, de préférence n'est pas supérieure à un tiers de la longueur de la cuve technique (1) dans la direction d'écoulement.

6. Procédé selon une ou plusieurs des revendications précédentes, **caractérisé en ce que**, à l'étape (i), les courants au moins partiellement opposés ou de même orientation par rapport à la direction d'écoulement prédominante sont générés aux endroits $A_n$ par des turbomachines, qui absorbent un travail mécanique et qui le renvoient sous la forme d'une énergie d'écoulement au milieu liquide qui les entoure.

7. Procédé selon la revendication 6, **caractérisé en ce qu'**on met en oeuvre, à titre de turbomachines (3), des agitateurs, des hélices, des roues à aubes et/ou des pompes centrifuges.

**8.** Procédé selon une des revendications précédentes 6 et 7 ou les deux, **caractérisé en ce que** la turbomachine respective génère, via un accès à l'air extérieur, un courant d'un mélange air-eau à l'endroit respectif $A_n$ qui est au moins partiellement opposé ou de même orientation par rapport à la direction d'écoulement prédominante dans la cuve technique (1).

Figur 1

EP 2 138 463 B1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8629601 U1
- DE 10345332 A1

- DE 10104329